# EUROPEAN PATENT APPLICATION

(11) **EP 3 053 701 A1**
(43) Date of publication of application: **10.08.2016**
(21) Application number: 16154185.9
(22) Date of filing: 04.02.2016
(51) Int. Cl.: B23P 6/00, F01D 25/24

(54) **FLANGELESS CONICAL SLEEVE AND METHOD OF REPAIR**

(30) Priority: 09.02.2015 US 201514617150
(71) Applicant: United Technologies Corporation, Farmington, CT 06032 (US)
(72) Inventor: PALMISANO, Leonard Paul, Forestville, CT Connecticut 06010 (US)
(74) Representative: Leckey, David Herbert

(57) **Abstract**

A method of repairing a metal component (305) is provided. The method may use a conical flangeless sleeve (230; 330) to repair fastener interfaces. In various embodiments, a conical flangeless sleeve (230; 330) may comprise an outer surface (334), an inner surface (332), and a sloped radial surface, and through hole (336). The sloped radial surface may be defined between the outer surface (334) and the inner surface (332). The through hole (330) may be defined between the outer surface (334) and the inner surface (332). The conical flangeless sleeve (230; 330) may be insertable in a conical void (303) of metal component (305).

## Description

### FIELD

The present disclosure relates to sleeves and associated methods of repair of metal components, and more particularly, flangeless conical sleeves and associated methods of repair of metal components.

### BACKGROUND

Engine components designed with through wall holes may be prone to corrosion, wear, and/or mechanical damage at the through wall holes and/or fastener interfaces. Where corrosion, wear, and/or mechanical damage have occurred, maintenance operations that utilize bushings or sleeves to restore whole dimensions to design requirements may be used. The typical bushings and sleeves used in these kinds of repairs may limit the nature of the repair depending on the interface and/or surface characteristics associated with the engine component and/or the size of the corrosion, wear, or damage. In this regard, where the size of the corrosion, wear, and/or mechanical damage is great, restoration using a typical bushing may be limited because the diameter of the bushing cannot be equal to or greater than the diameter of the fastener head. Rather, the diameter of the fastener head should have a smaller diameter, otherwise, a typical bushing may pull through the removed area when a fastener is inserted through the bushing and tightened to an internal component of the engine component associated with the through hole.

### SUMMARY

A method of repairing a metal component is provided. The method may comprise steps and/or operations including: detecting, on a metal component, a damaged portion at a fastener interface; removing, with a conically shaped cutter, the damaged portion at the fastener interface, wherein a conical void is defined in a surface of the metal component; selecting a conical flangeless sleeve to fill the conical void; installing the conical flangeless sleeve in the conical void, wherein the conical flangeless sleeve defines at least a portion of the fastener interface; and securing the conical flangeless sleeve in the conical void of the metal component with a fastener.

In various embodiments, a conical flangeless sleeve may comprise an outer surface, an inner surface, and a sloped radial surface, and through hole. The sloped radial surface may be defined between the outer surface and the inner surface. The through hole may be defined between the outer surface and the inner surface. The conical flangeless sleeve may be insertable in a conical void of metal component.

In various embodiments, an assembly may comprise a metal component and a conical flangeless sleeve. The metal component may define a conical void at a fastener interface. The metal component may have been repaired at the fastener interface. The conical flangeless sleeve may comprise a outer surface, an inner surface and a sloped radial surface. The sloped radial surface may be defined between the outer surface and the inner surface. The sloped radial surface may be configured to engage the conical void at the fastener interface.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 illustrates cross-sectional view of an exemplary gas turbine engine, in accordance with various embodiments;
FIG. 2A illustrates a schematic cross-sectional view of a metal component repaired with various prior art sleeves, in accordance with various embodiments;
FIG. 2B illustrates a schematic cross-sectional view of a metal component repaired with a conical flangeless sleeve, in accordance with various embodiments;
FIG. 2C illustrates a schematic cross-sectional view of a metal component repaired with a conical flangeless sleeve and including a fastener , in accordance with various embodiments;
FIG. 3A illustrates a schematic cross-section view of a flangeless conical sleeve installed in a portion of a metal component, in accordance with various embodiments;
FIG. 3B illustrates an exploded schematic cross-section view of a portion of a flangeless conical sleeve and a portion of a metal component, in accordance with various embodiments;
FIG. 3C illustrates a schematic cross-section view of a non-uniform flangeless conical sleeve installed in a portion of a metal component, in accordance with various embodiments;
FIG. 3D illustrates an exemplary conical cutter, in accordance with various embodiments; and
FIG. 4 illustrates and exemplary method of repair with a flangeless conical sleeve, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice these embodiments, it should be understood that other embodiments may be realized and that logical changes and adaptations in design and construction may be made in accordance with the present disclosure and the teachings herein. Thus, the detailed description herein is presented for purposes of illustration only and not for providing limitations on the scope of the disclosure. For example, the steps recited in any of the methods or process descriptions may be executed in any order and are not limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact. Moreover, surface shading lines may be used throughout the figures to denote different parts but not necessarily to denote the same or different materials.

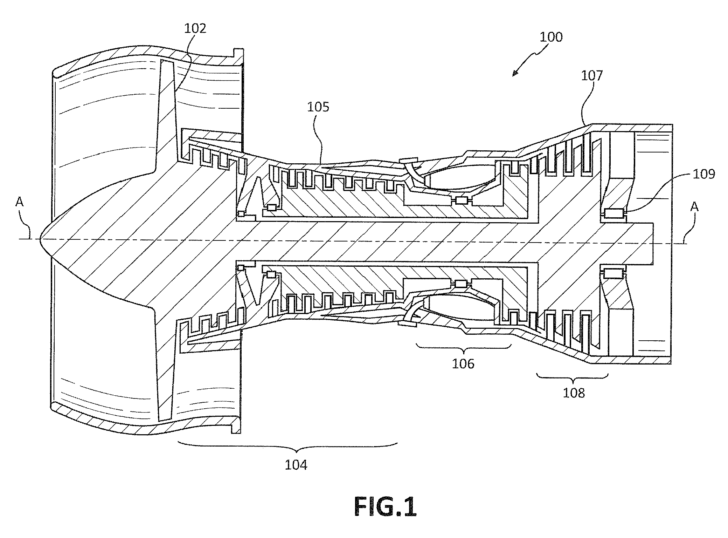

Referring to FIG. 1, a gas turbine engine 100 (such as a turbofan gas turbine engine) is illustrated according to various embodiments. Gas turbine engine 100 is disposed about axial centerline axis A-A, which may also be referred to as axis of rotation A-A. Gas turbine engine 100 may comprise a fan 102, one or more compressor sections 104, a combustion section 106, and one or more turbine sections 108. Compressor section 104 may be a single or multi-stage compressor. Similarly, turbine section 108 may be a single or multi-stage turbine. Compressor section 104 may be housed within a compressor housing 105 (e.g., a metal component). Similarly, turbine section 108 may be housed within a turbine housing 107 (e.g., a metal component).

Air compressed in the compressor section 104 may be mixed with fuel and burned in combustion section 106 and expanded across the turbine section 108. The turbine section 108 may include one or more high pressure rotors and one or more low pressure rotors, which rotate in response to the expansion. The turbine section 108 may comprise alternating rows of rotary airfoils or blades and static airfoils or vanes. Cooling air may be supplied to the turbine section 108 from the compressor section 104. A plurality of bearings 109 may support spools in the gas turbine engine 100. FIG. 1 provides a general understanding of the sections in a gas turbine engine, and is not intended to limit the disclosure. The present disclosure may extend to all types of turbine engines, including turbofan gas turbine engines and turbojet engines, for all types of applications.

The forward-aft positions of gas turbine engine 100 lie along axis of rotation A-A. For example, fan 102 may be referred to as forward of turbine section 108 and turbine section 108 may be referred to as aft of fan 102. Typically, during operation of gas turbine engine 100, air flows from forward to aft, for example, from fan 102 through compressor section 104 and combustion section 106 to turbine section 108. As air flows from fan 102 to the more aft components of gas turbine engine 100, axis of rotation A-A may also generally define the direction of the air stream flow.

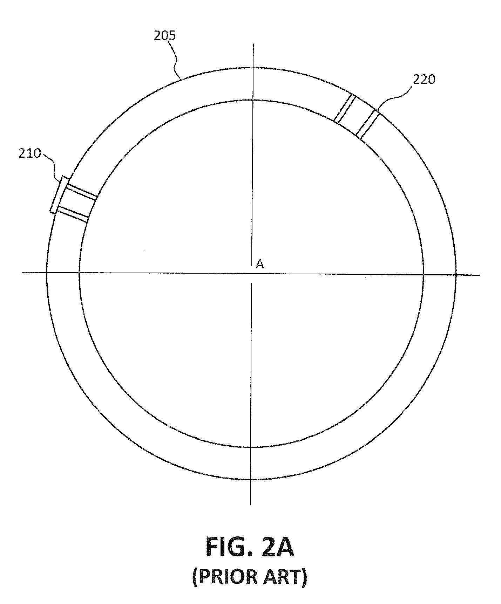

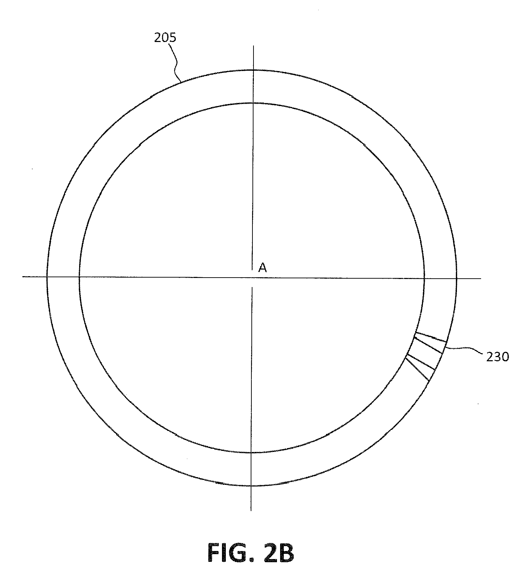

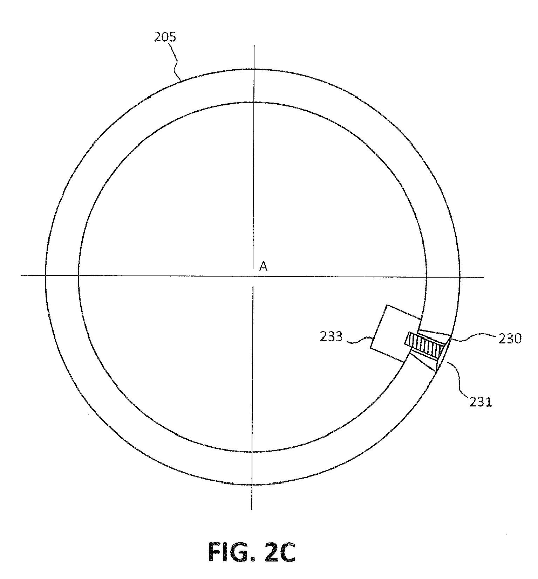

In various embodiments and with reference to FIG. 2A - FIG. 2C, conical flangeless sleeve 230 may be configured to repair a through hole in housing 205. Housing 205 may be any exemplary metal component including, for example, a compressor housing 105 as shown in FIG. 1, turbine housing 107 as shown in FIG. 1, and/or any other suitable metal component having one or more through holes.

In various embodiments, conical flangeless sleeve 230 may be capable of being installed in a conical void created in housing 205. Conical flangeless sleeve 230 may be configured to define at least a portion of a through hole in housing 205. In this regard, conical flangeless sleeve 230 may be capable of removeably receiving a fastener 231. Fastener 231 may be removeably installable in the through hole defined in conical flangeless sleeve 230. Fastener 231 may be further configured to operatively couple to an internal structure 233, such as, for example, a nut, a vane, an air foil, a clip, and/or any other suitable structure.

In various embodiments, engine components have been traditionally repaired with sleeve 220 and/or flanged sleeve 210. Initial or small repairs were traditionally made with sleeve 220. In this regard, sleeve 220 can be inserted into the area defining a through hole that has been drilled out to restore the drilled out through hole to design requirements. However, where a repair benefitted from a larger hole, sleeve 220 was not suitable for the repair because the fastener inserted into the through hole defined by sleeve 220 would cause sleeve 220 to liberate and/or pull toward the center point A of housing 205 and/or centerline A-A of gas turbine engine 100, as shown in FIG. 1. In these cases, flanged sleeve 210 may be employed. The flange of flanged sleeve 210 provided a wider support that engaged housing 205 and allowed larger through holes to be drilled in housing 205. Moreover, the sleeve of flanged sleeve 210 was able to restore the through hole to design requirements. However, the flange of flanged sleeve 210 may create an interference with mating hardware on the outer surface of housing 205 due to the increased cross-section thickness created by the addition of the flange. In this regard, Interference with mating hardware may include lack of thread engagement created by this increase in cross-section thickness.

In various embodiments, conical flangeless sleeve 230 remedies the issues associated with sleeve 220 and flanged sleeve 210 by distributing the support of conical flangeless sleeve 230 to a conical void defined in housing 205 (e.g., the damage, wear, and/or corrosion may be removed with a conical cutter and/or reamer creating a conical void). In this regard, housing 205 supports the conical shape of conical flangeless sleeve 230, preventing conical flangeless sleeve 230 from pulling through housing 205 toward central point A, when a fastener 231 is inserted in the through hole of conical flangeless sleeve 230.

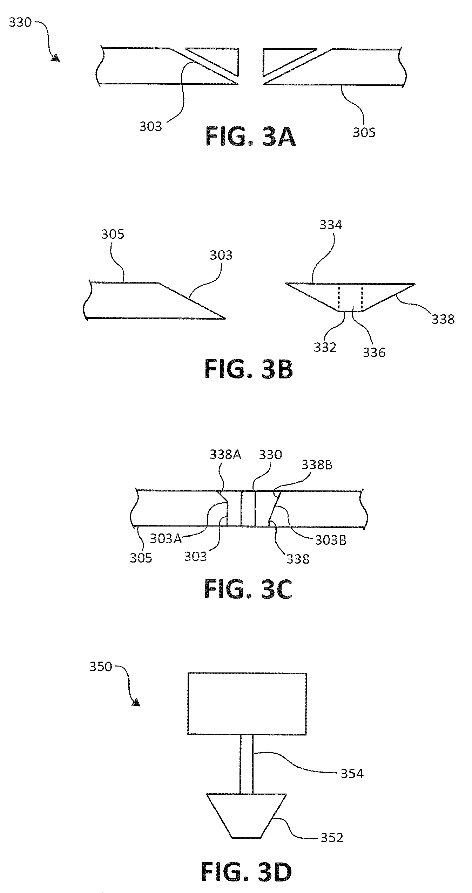

In various embodiments and with reference to FIG. 3A - FIG. 3C, conical flangeless sleeve 330 may comprise an outer surface 334 and inner surface 332, and a sloped annular surface 338. Conical flangeless sleeve 330 may further define a through hole 336 that extends between outer surface 334 and inner surface 332 about a center line of conical flangeless sleeve 330. Housing 305 (e.g., a metal component) may comprise a conical void defined by an annular recess 303 in housing 305.

In various embodiments and with specific reference to FIG. 3C, the shape and or profile of sloped annular surface 338 may vary from through-hole to through-hole as illustrated, but maintain uniformity at any individual hole. The shape may correspond to a shape of annular recess 303 in which the entire surface is sloped, or may have the shape of annular recess 338A or 338B in which a portion of the flangeless sleeve maintains a non-conical or straight section of the shank. In either regard, annular recess 303 may maintain a conical slope at any angle while maintaining uniformity for any given hole or, exhibit a portion of the flangeless sleeve that is non-conical. Illustrations provided provide a wide array of variations that may be used.

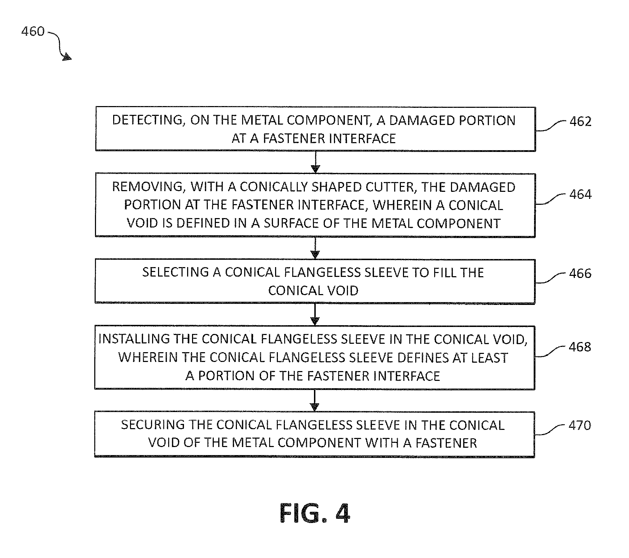

In various embodiments and with reference to FIG. 3A - FIG. 3D and FIG. 4, a method 460 of repairing a metal component is provided. Method 460 may comprise detecting, on the metal component (e.g., housing 305), a damaged portion at a fastener interface (Step 462). The metal component and/or housing 305 may be inspected at various through hole locations and/or fastener interfaces. These locations may be prone to corrosion, wear, and/or mechanical damage because of the interface between the fastener and an internal structure housed within housing 305.

In various embodiments, method 460 may further comprise removing with a cutter 350 the damaged portion at the fastener interface (Step 464). Cutter 350 may comprise a powerhead and a conical cutter 352 (e.g., a conical reamer). The powerhead for 354 may be configured to drive conical cutter 352. Moreover, cutter 350 and more specifically conical cutter 352 may be configured to remove material from housing 305, when driven by powerhead 354. In this regard, a conical void may be defined in the surface of the metal component and/or housing 305.

In various embodiments, method 460 may further comprise selecting a conical flangeless sleeve 330 to fill the conical void (step 466). In this regard, a plurality of conical flangeless sleeves 330 may be provided. The conical flangeless sleeves 330 may be provided in various sizes. In this regard, the overall height defined by the distance between inner surface 332 and outer surface 334 may be varied across a plurality of flangeless conical sleeves 330. The diameter of inner surface 332 outer surface 334 may be varied across a plurality of flangeless conical sleeves 330. Moreover, the slope of sloped annular surface 338 may be varied over the plurality of conical flangeless sleeves 330. For example, various standard-sized conical flangeless sleeves 330 may be provided. These standard-sized conical flangeless sleeves 330 may correspond to one or more conical cutter 352 provided with cutter 350. These standard-sized conical flangeless sleeves 330 may also correspond to determined cut depths of conical cutter 352 provided with cutter 350.

In various embodiments and in operation, a technician may select one size of the various size conical cutters 352 provided. The technician may remove material from housing 305 to define a particularly sized conical void in housing 305. In this regard, the technician may cut the conical void to a particular depth or cut the void to a particular size with a selected conical cutter 352. The technician may further select a correspondingly sized conical flangeless sleeve for insertion in the conical void defined by conical cutter 352.

In various embodiments, method 460 may further comprise installing conical flangeless sleeve 330 in the conical void (Step 468). In this regard, conical flangeless sleeve 330 may define at least a portion of the fastener interface defined within housing 305. Moreover, conical flangeless sleeve 330 may restore the fastener interface and/or the through hole to original design requirements. Method 460 may further comprise securing conical flangeless sleeve 330 in the conical void of the metal component with a fastener (Step 470). In this regard, conical flangeless sleeve 330 may be configured to receive and support the head of a fastener allowing the fastener to pass through hole 336 of conical flangeless sleeve 330 and attach to an internal structure housed within the metal component and/or housing 305.

In various embodiments, conical flangeless sleeves and associated methods of use may reduce the complexity repairs of metal components, the cost of repairs of metal components, and may extents the overall life of a metal component. While described herein in the context of gas turbine engine components such as, for example, the conical flangeless components and corresponding methods described herein may be used in any application and with any suitable metal components.

Benefits and advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, such benefits, advantages, and any elements that may cause any benefit or advantage to occur or become more pronounced are not to be construed as critical, required, or essential features or elements of the disclosure. Reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. A method, comprising:
removing, with a conically shaped cutter (352), a damaged portion at a fastener interface of a metal component (305), wherein a conical void (303) is defined in a surface of the metal component (305);
selecting a conical flangeless sleeve (230; 330) to fill the conical void (303);
installing the conical flangeless sleeve (230; 330) in the conical void (303), wherein the conical flangeless sleeve (230; 330) defines at least a portion of the fastener interface; and
securing the conical flangeless sleeve (230; 330) in the conical void (303) of the metal component (305) with a fastener (231).

2. The method of claim 1, further comprising, selecting the conically shaped cutter (352) from a plurality of variously sized conically shaped cutters.

3. The method of claim 1 or 2, wherein the conically shaped cutter (352) is insertable to a prescribed depth which defines a particularly sized conical void (303).

4. The method of claim 1, 2 or 3, wherein a plurality of conical flangeless sleeves (230; 330) of various sizes are provided, wherein, optionally, the plurality of conical flangeless sleeves (230; 330) of various sizes are associated with the conical cutter (352), and, further optionally, the conical cutter (352) is configured to define a plurality of standard-sized conical voids (303).

5. The method of any preceding claim, wherein the conical flangeless sleeve (230; 330) comprises an outer surface (334), an inner surface (332), and a sloped annular surface (338), wherein, optionally, the outer surface (334) is configured to mount flushly with the metal component (305).

6. The method of claim 5, wherein the sloped annular surface (338) is configured to engage and be supported by a portion of the metal component (305) defining the conical void (303).

7. The method of any preceding claim, wherein the metal component (305) is at least one of a compressor housing or a turbine housing.

8. The method of any preceding claim, modifying the conical flangeless sleeve (230; 330) to a size that corresponds to the conical void (303).

9. A conical flangeless sleeve (230; 330), comprising:
an outer surface (334);
an inner surface (332);
a sloped radial surface defined between the outer surface (334) and the inner surface (332);
a through hole (336) defined between the outer surface (334) and the inner surface (332), wherein the conical flangeless sleeve (230; 330) is insertable in a conical void (303) of a metal component (305).

10. The conical flangeless sleeve of claim 9, wherein the conical void (303) is defined at a fastener interface as part of a repair operation, wherein, optionally, the conical void (303) is configured to restore a size of the fastener interface.

11. The conical flangeless sleeve of claim 9 or 10, wherein the sloped radial surface is supportable by the conical void (303) of the metal component (305).

12. The conical flangeless sleeve of claim 9, 10 or 11, wherein the metal component (305) is at least one of a compressor housing or a turbine housing.

13. An assembly, comprising:
a metal component (305) defining a conical void (303) at a fastener interface, wherein the metal component (305) has been repaired at the fastener interface; and
a conical flangeless sleeve (230; 330) comprising,
an outer surface (334),
an inner surface (332), and
a sloped radial surface defined between the outer surface (334) and the inner surface (332), the sloped radial surface configured to engage the conical void (303) at the fastener interface.

14. The assembly of claim 13, wherein a through hole (336) is defined between the outer surface (334) and the inner surface (332), wherein, optionally, the through hole (336) corresponds to an original hole size of the fastener interface.

15. The assembly of claim 13 or 14, wherein the metal component (305) is at least one of a compressor housing or a turbine housing.
